# EUROPÄISCHE PATENTANMELDUNG

(11) **EP 2 523 295 A1**
(43) Veröffentlichungstag der Anmeldung: **14.11.2012**
(21) Anmeldenummer: 11165619.5
(22) Anmeldetag: 11.05.2011
(51) Int. Cl.: H02H 9/04, H02M 5/458, H02H 7/12

(54) **Frequenzumrichter mit Überspannungsschutz für eine Notabschaltung und Verfahren zum Betreiben desselben**

(71) Anmelder: SIEMENS AKTIENGESELLSCHAFT, 80333 München (DE)
(72) Erfinder: Dillig, Reinhold, 96117, Memmelsdorf (DE); Göpfrich, Kurt, 91058, Erlangen (DE); Herrmann, Bernd, 91074, Herzogenaurach (DE); Schierling, Hubert, 91052, Erlangen (DE); Schwinn, Thomas, 91074, Herzogenaurach (DE)

(57) **Zusammenfassung**

Die Erfindung betrifft einen Frequenzumrichter (26) zum Betreiben einer elektrischen Maschine (14) an einem elektrischen Netz (12). Bei dem Frequenzumrichter ist eine Einspeiseeinheit (28) über einen Zwischenkreis (30) mit einem Umrichter (32) verschaltet. Falls ein Defekt, beispielsweise in der elektrischen Maschine (14) oder im Umrichter (32), dazu führt, dass der Stromfluss im Zwischenkreis (30) abrupt unterbrochen wird, kann durch Induktivitäten von Kommutierungsdrosseln (L₁***,*** L₂***,*** L₃) eine hohe Spannung induziert werden, durch welche die Einspeiseeinheit (28) beschädigt werden kann. Es soll ein Schutz für die Einspeiseeinheit (28) bereitgestellt werden. Bei dem erfindungsgemäßen Frequenzumrichter (26) weist der Zwischenkreis (30) zusätzlich einen zuschaltbaren Kondensator (38) auf. Gemäß dem erfindungsgemä-βen Verfahren wird der zuschaltbare Kondensator (38) bei einer Unterbrechung eines Stromflusses im Zwischenkreis (30) mit einem Leitungszweig (Z₁) des Zwischenkreises (30) elektrisch gekoppelt.

## Beschreibung

Die Erfindung betrifft einen Frequenzumrichter zum Betreiben einer elektrischen Maschine an einem elektrischen Netz. Der Frequenzumrichter weist eine Einspeiseeinheit, zumindest einen Umrichter sowie einen die Einspeiseeinheit mit dem Umrichter verbindenden Gleichspannungs-Zwischenkreis auf. In dem Gleichspannungs-Zwischenkreis, oder kurz Zwischenkreis, ist zumindest ein Zwischenkreiskondensator bereitgestellt. Die Erfindung betrifft auch ein Verfahren zum Betreiben des Frequenzumrichters. Ein Frequenzumrichter der genannten Art ist aus der DE 197 39 553 A1 bekannt.

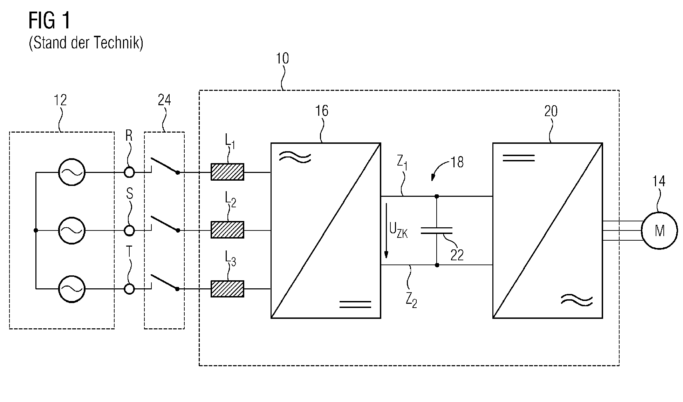

Die prinzipielle Funktionsweise eines Frequenzumrichters der genannten Art ist anhand der schematischen Darstellung in FIG 1 im Folgenden näher erläutert. Mittels eines Frequenzumrichters 10 kann elektrische Energie zwischen einem Wechselspannungs-Versorgungsnetz, im Folgenden kurz als Netz 12 bezeichnet, und einer elektrischen Maschine 14 ausgetauscht werden. Die elektrische Maschine 14 kann ein Elektromotor oder ein Generator sein. Entsprechend erfolgt der Austausch der elektrischen Energie entweder vom Netz 12 zur Maschine 14 oder umgekehrt.

Mittels des Frequenzumrichters 10 ist es möglich, eine Umwandlung zwischen einer Netz-Wechselspannung mit vorgegebener Netzfrequenz einerseits und einer für den Betrieb der elektrischen Maschine 14 nötigen Wechselspannung mit wählbarer Frequenz andererseits durchzuführen. Eine netzseitige Einspeiseeinheit 16 des Frequenzumrichters 10 wandelt dazu zwischen der Netz-Wechselspannung und einer Gleichspannung U_{ZK} um, die zwischen zwei Leitungszweigen Z₁ und Z₂ eines Zwischenkreises 18 anliegt. Die Leitungszweige Z₁ und Z₂ verbinden die Einspeiseeinheit 16 mit einem Umrichter 20. Sie umfassen in der Regel Stromschienen. Der Umrichter 20 wandelt zwischen der Gleichspannung U_{ZK} und einer Wechselspannung für die elektrische Maschine 14 um.

Das Netz 12 kann, wie hier dargestellt, ein Drehstromnetz mit drei Netzphasen R, S, T sein. Es kann sich bei dem Netz 12 aber z.B. auch um ein zweiphasiges Netz handeln. Auch die elektrische Maschine 14 kann eine Maschine mit einer beliebigen Anzahl von Phasen sein. Hier dargestellt ist eine dreiphasige Drehstrommaschine.

In dem Zwischenkreis 18 sorgt ein Zwischenkreiskondensator 22 durch eine ausreichend große Kapazität dafür, dass eine bei einem der beschriebenen Wandlungsschritte erzeugte Welligkeit der Gleichspannung U_{ZK} so weit geglättet ist, dass sie den anderen Wandlungsschritt nicht beeinflusst. Bevorzugt ist die Zwischenkreiskondensator-Kapazität auch groß genug, um bei einem kurzzeitigen Ausfall der Netz-Wechselspannung für einige Millisekunden einen unterbrechungsfreien Betrieb der elektrischen Maschine 14 zu ermöglichen.

Der Einspeiseeinheit 16 können netzseitig Drosseln L₁***,*** L₂***,*** L₃ vorgeschaltet sein. Diese verhindern, dass von der Einspeiseeinheit 16 bei der Spannungswandlung erzeugte Störsignale als Oberwellen in das Netz 12 übertragen werden. Die Drosseln L₁***,*** L₂***,*** L₃ können eine weitere Funktion haben, wenn die Einspeiseeinheit 16 als Hochsetzsteller betrieben wird, der eine Gleichspannung U_{ZK} mit einem Effektivwert erzeugt, der unabhängig von einem Effektivwert der Netzspannung ist. Die Drosseln L_{1***,***} L₂***,*** L₃ sind dann als Kommutierungsinduktivitäten ausgelegt, die verhindern, dass in einem getakteten Betrieb der Einspeiseeinheit 16 erzeugte Kurzschlüsse zwischen den einzelnen Netzphasen R, S, T in der Einspeiseeinheit 16 zu einem Kommutierungsstrom mit einer kritischen Stromstärke führen.

Um die elektrische Maschine 14 als Motor zu betreiben, wird durch Schließen eines Hauptschützes 24 die Einspeiseeinheit 16 mit den Netzphasen R, S, T des Netzes 12 elektrisch verbunden. Die Einspeiseeinheit 16 erzeugt daraufhin, beispielsweise durch eine Vollweg-Gleichrichtung, die Gleichspannung U_{ZK}, wodurch der Zwischenkreiskondensator 22 aufgeladen wird. Dieser Ladevorgang wird im Folgenden als Vorladephase bezeichnet.

Nachdem der Zwischenkreiskondensator 22 so weit aufgeladen ist, dass die Gleichspannung U_{ZK} einen gewünschten Spannungswert erreicht hat, kann die elektrische Maschine 14 betrieben werden. Dazu erzeugt der Umrichter 20 aus der Gleichspannung U_{ZK} eine hier dreiphasige Wechselspannung, so dass in der elektrischen Maschine 14 ein Drehstrom fließt. Dieser Vorgang ist im Folgenden als Betriebsphase bezeichnet. Eine Frequenz des Drehstroms kann bei dem Umrichter 20 einstellbar sein.

Ein Problem ergibt sich, wenn während der Betriebsphase ein Defekt (beispielsweise in der elektrischen Maschine 14 oder im Umrichter 20) dazu führt, dass der Stromfluss im Zwischenkreis 18 abrupt unterbrochen wird. Durch Induktivitäten im Netz 12 und durch die Induktivitäten der Drosseln L_{1***,***} L₂***,*** L₃ wird dann eine hohe Spannung induziert, durch welche die Einspeiseeinheit 16 beschädigt werden kann. Besonders groß ist dieses Risiko, wenn eine Beschädigung eines der Leitungszweige Z₁***,*** Z₂ oder des Zwischenkreiskondensators 22 dazu führt, dass die elektrische Verbindung zwischen der Einspeiseeinheit 16 und dem Zwischenkreiskondensator 22 unterbrochen wird.

Es ist Aufgabe der vorliegenden Erfindung, für einen Frequenzumrichter der beschriebenen Art einen ausreichenden Schutz der Einspeiseeinheit bereitzustellen.

Die Aufgabe wird durch einen Frequenzumrichter gemäß Patentanspruch 1 und ein Verfahren gemäß Patentanspruch 8 gelöst. Vorteilhafte Weiterbildungen des erfindungsgemäßen Frequenzumrichters und des erfindungsgemäßen Verfahrens sind durch die Unteransprüche gegeben.

Der erfindungsgemäße Frequenzumrichter ist eine Weiterbildung des gattungsgemäßen Frequenzumrichters. Bei dem erfindungsgemäßen Frequenzumrichter weist der Zwischenkreis zusätzlich einen zuschaltbaren Kondensator auf. Bei einer Unterbrechung eines Stromflusses im Zwischenkreis wird dann gemäß dem erfindungsgemäßen Verfahren der zuschaltbare Kondensator mit einem Leitungszweig des Zwischenkreises elektrisch gekoppelt, so dass ein Stromfluss in den zuschaltbaren Kondensator ermöglicht ist. Hierdurch ergibt sich der Vorteil, dass die von Induktivitäten induzierte Spannung zu einem wesentlich geringeren Anstieg der Spannung in der Einspeiseeinheit und im Zwischenkreis führt. Die von den Induktivitäten, also z. B. den Kommutierungsdrosseln, bei der Unterbrechung des Stromflusses abgegebene Energie wird einfach von dem zugeschalteten Kondensator aufgenommen.

Der zusätzliche Kondensator ist aber nicht durchgehend mit dem Rest des Zwischenkreises elektrisch gekoppelt. Gemäß dem erfindungsgemäßen Verfahren wird ein Stromfluss in den zuschaltbaren Kondensator während der Vorladephase blockiert. Damit ist folgendes Problem vermieden: Vor einer Inbetriebnahme des Frequenzumrichters, d.h. vor dem Schließen des Hauptschützes, sind der Zwischenkreiskondensator und der zusätzliche Kondensator in der Regel ungeladen. Durch Schließen des Hauptschützes wird dann ein Ladestrom vom Netz in die ungeladenen Kondensatoren ermöglicht, dessen Stromstärke aufgrund der zusätzlichen Kapazität des zuschaltbaren Kondensators so groß werden kann, dass Komponenten der Einspeiseeinheit beschädigt werden.

Durch Abschalten des zuschaltbaren Kondensators in der Vorladephase ist ein Ladestrom in diesen Kondensator blockiert. Deshalb muss in Bezug auf die Vorladephase nicht darauf geachtet werden, wie groß die Kapazität des zuschaltbaren Kondensators ist. Somit kann seine Kapazität unabhängig von einer Stromtragfähigkeit der Einspeiseeinheit gewählt werden. Sie kann also in optimaler Weise an die Kommutierungsinduktivitäten und die Netzinduktivitäten angepasst werden.

Der zuschaltbare Kondensator muss im abgeschalteten Zustand nicht vollständig, d. h. galvanisch, von den Leitungszweigen des Zwischenkreises getrennt sein. Es reicht aus, wenn der Stromfluss in den zuschaltbaren Kondensator während der Vorladephase so weit blockiert ist, dass die Einspeiseeinheit durch den reduzierten Ladestrom nicht beschädigt wird. Entsprechend ist bei einer Ausführungsform des erfindungsgemäßen Frequenzumrichters der zuschaltbare Kondensator über einen spannungsabhängigen Widerstand, also z.B. einen Varistor, mit einem Leitungszweig des Zwischenkreises gekoppelt. Hierdurch wird ein signifikanter Stromfluss in den Kondensator erst dann ermöglicht, wenn die Spannung im Zwischenkreis über einen kritischen Wert steigt. Zugleich wird durch den Widerstand erreicht, dass die Stromstärke des Ladestroms in den Kondensator auch nach Zuschalten desselben gering genug bleibt, um den Kondensator selbst oder die Einspeiseeinheit nicht zu beschädigen.

Bei einer anderen Ausführungsform des erfindungsgemäßen Frequenzumrichters ist der zuschaltbare Kondensator über eine Zenerdiode und/oder eine Suppressordiode (TSV-Diode - Transient Voltage Suppressor Diode) mit einem Leitungszweig des Zwischenkreises gekoppelt. Diese haben ein sehr schnelles Schaltverhalten und einen geringen Leckstrom. Insbesondere Suppressordioden können zudem sehr große Leistungen übertragen.

Ein anderer Vorteil ergibt sich, wenn der zuschaltbare Kondensator über einen Schalter mit einem Leitungszweig des Zwischenkreises zuschaltbar ist. Der Kondensator ist in diesem Fall in Abhängigkeit von einem Steuersignal zuschaltbar. Beispielsweise kann so während der Betriebsphase des Frequenzumrichters ebenfalls ein Stromfluss in den zuschaltbaren Kondensator durch Bereitstellen einer elektrischen Kopplung, d.h. durch Schließen des Schalters, ermöglicht werden. Dann ergibt sich der Vorteil, dass neben der Kapazität des Zwischenkreiskondensators selbst auch diejenige des zugeschalteten Kondensators eine Stabilisierung der Zwischenkreis-Gleichspannung bewirkt.

Unabhängig von der Art des Schaltelementes (Varistor, Suppressordiode, steuerbarer Schalter) kann der zuschaltbare Kondensator zusätzlich über eine Diode mit einem Leitungszweig des Zwischenkreises gekoppelt sein. Durch die Diode ist dann ermöglicht, dass sich der Kondensator in den Leitungszweig entlädt. Dadurch ergibt sich der Vorteil, dass sich der Kondensator bei wiederholt auftretenden Überspannungen zwischendurch immer wieder selbständig so weit entladen kann, dass die über ihm abfallende Spannung der Nennspannung des Zwischenkreises entspricht. Tritt dann erneut eine Überspannung auf, kann der Kondensator wieder Energie von den Kommutierungsdrosseln aufnehmen. Ohne die Entladung wäre dies nur möglich, wenn die erneut auftretende Überspannung einen grö-βeren Spannungswert aufweisen würde als die vorangegangene. Andernfalls wäre der Kondensator nicht wirksam.

In einer bevorzugten Ausführungsform des erfindungsgemäßen Frequenzumrichters ist der Zwischenkreiskondensator von der Einspeiseeinheit mittels eines Schalters elektrisch trennbar. Der Schalter ist hierbei insbesondere ein Halbleiterschalter. Indem auch der Zwischenkreiskondensator gesteuert zuschaltbar ist, kann er in der Vorladephase gesteuert aufgeladen werden. Hierdurch kann die Einspeiseeinheit zusätzlich vor einer Beschädigung durch einen zu großen Ladestrom des Zwischenkreiskondensators geschützt werden. Damit kann ein Frequenzumrichter mit einer beliebig großen Zwischenkreiskapazität bereitgestellt werden.

Bei dieser Ausführungsform ergibt sich ein weiterer Vorteil, wenn der Zwischenkreis zusätzlich einen dauerhaft mit der Einspeiseeinheit elektrisch gekoppelten Kommutierungskondensator aufweist, durch welchen eine Kommutierungskapazität für einen Normalbetrieb der Einspeiseeinheit bereitgestellt ist. Mit einer Kommutierungskapazität ist hier eine Kapazität gemeint, deren Wert wesentlich kleiner als der Kapazitätswert des Zwischenkreiskondensators ist. Bevorzugt beträgt die Kommutierungskapazität weniger zehn Prozent, insbesondere weniger als ein Prozent, der Zwischenkreiskapazität. Ein Betrag der Kommutierungskapazität kann auch in Abhängigkeit von einem Induktivitätswert der bereits beschriebenen Drosseln und/oder einer Induktivität des Netzes, an das der Frequenzumrichter angeschlossen ist, gewählt sein.

Mittels der Kommutierungskapazität kann erreicht werden, dass eine beim Betrieb des Einspeisewandlers als Hochsetzsteller entstehende Induktionsspannung stets unterhalb eines für die Funktionstüchtigkeit des Frequenzumrichters kritischen Spannungswertes bleibt. Da die Kommutierungskapazität verhältnismäßig klein ist, ist sichergestellt, dass der Einspeisewandler beim Schließen des Hauptschützes nicht durch einen Ladestrom des Kommutierungskondensators beschädigt wird. Indem zusätzlich noch der zuschaltbare Kondensator bereitgestellt ist, kann die Wahl der Kapazität des Kommutierungskondensators unabhängig davon erfolgen, wie viel Energie im Fehlerfall von Kommutierungsdrosseln aufgenommen werden muss. Hierfür kann die Kapazität des zuschaltbaren Kondensators entsprechen ausgelegt werden.

Im Folgenden wird die Erfindung anhand von bevorzugten Ausführungsbeispielen näher erläutert. Dazu zeigt:
- FIG 1: ein Blockschaltbild eines Frequenzumrichters gemäß dem Stand der Technik, mit dem eine elektrische Maschine an einem Netz betrieben wird,
- FIG 2: ein Blockschaltbild eines Frequenzumrichters gemäß einer Ausführungsform des erfindungsgemäßen Frequenzumrichters,
- FIG 3: einen zuschaltbaren Kondensator eines Frequenzumrichters gemäß einer anderen Ausführungsform des erfindungsgemäßen Frequenzumrichters, und
- FIG 4: einen weiteren zuschaltbaren Kondensator eines Frequenzumrichters gemäß einer weiteren Ausführungsform des erfindungsgemäßen Frequenzumrichters.

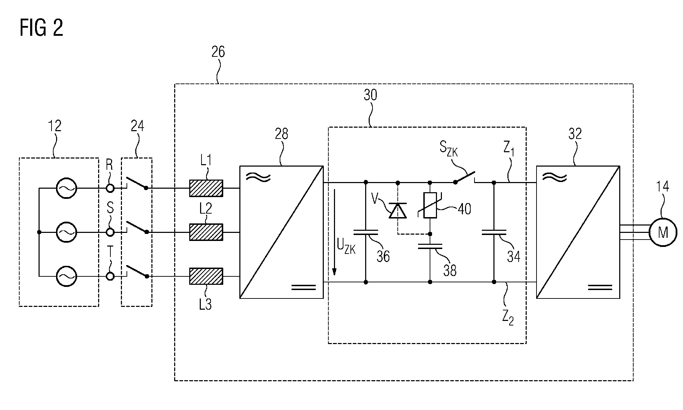

In FIG 2 ist ein Frequenzumrichter 26 gezeigt, der über ein Hauptschütz 24 an Netzphasen R, S, T eines Netzes 12 angeschlossen ist. An den Frequenzumrichter 26 ist eine elektrische Maschine 14 angeschlossen. Bis auf den Frequenzumrichter 26 entsprechen die genannten Elemente den in FIG 1 gezeigten Elementen mit den gleichen Bezugszeichen. Sie werden deshalb nicht noch einmal erläutert

Bei dem Frequenzumrichter 26 ist eine Einspeiseeinheit 28 über einen Zwischenkreis 30 mit einem Umrichter 32 verschaltet. Der Einspeiseeinheit 28 sind netzseitig Kommutierungsdrosseln L_{1***,***} L₂***,*** L₃ vorgeschaltet, die als Kommutierungsinduktivitäten für die Einspeiseeinheit 28 ausgelegt sind.

In dem Zwischenkreis 30 wird ein Strom von der Einspeiseinheit 28 über zwei Leitungszweige Z₁ und Z₂ zum Umrichter 32 geführt. Die beiden Leitungszweige Z₁ und Z₂ sind über einen Zwischenkreiskondensator 34, einen Kommutierungskondensator 36 und einen zuschaltbaren Kondensator 38 kapazitiv gekoppelt. Der zuschaltbare Kondensator 38 ist dabei über einen Varistor 40 mit dem Leitungszweig Z₁ gekoppelt. Dem Varistor 40 kann eine Diode V zum Entladen des Kondensators 38 parallel geschaltet sein. Diese Möglichkeit ist in FIG 2 durch gestrichelte Linien angedeutet. Zusätzlich zur oder anstelle von der Diode V kann auch ein hochohmiger Widerstand als Entladewiderstand eingebaut sein.

Eine Kapazität des Zwischenkreiskondensators 34 kann in dem gezeigten Beispiel größer als 1 mF sein. Die Kapazität des Kommutierungskondensators 36 ist in diesem Beispiel kleiner als 5 µF. Sie ist aber im Allgemeinen in Abhängigkeit von einer über den Frequenzumrichter 26 bestimmungsgemäß übertragbaren Gesamtleistung gewählt, wobei sie zudem bevorzugt weniger als zehn Prozent der Kapazität des Zwischenkreiskondensators 34 beträgt. Eine Kapazität des zuschaltbaren Kondensators 38 kann größer als diejenige des Kommutierungskondensators 36 sein.

Der Zwischenkreiskondensator 34 und der Umrichter 32 können von der Einspeiseeinheit 28 durch einen Schalter S_{ZK} getrennt werden, der hier im Leitungszweig Z₁ eingebaut ist.

Der Schalter S_{ZK} kann ein Halbleiterschalter sein. Bevorzugt umfasst der Schalter S_{ZK} einen Transistor, insbesondere einen SiC-MOSFET (SiC - Siliziumcarbid, MOS - Metall-Oxid-Halbleiter, FET - Feldeffekttransistor), einen SiC-JFET (JFET - Sperrschicht-FET, Junction-FET), einen IGBT (Insulated Gate Bipolar Transistor) oder einen Si-Transistor (Si - Silizium), oder aber auch eine Kaskodenschaltung aus einem MOSFET und einem JFET umfassen. SiC-basierte Transistoren sind sehr Hitzebeständig, so dass mittels des Frequenzumrichters auch elektrische Maschinen mit einer großen elektrischen Leistung, beispielsweise über 10 kW, betrieben werden können.

Ein (nicht dargestellter) Steuereingang des Schalters S_{ZK} ist mit einer (ebenfalls nicht dargestellten) Steuereinrichtung gekoppelt. Die Steuereinrichtung erzeugt an dem Steuereingang eine Steuerspannung, über die ein Schaltzustand des Schalters S_{ZK} eingestellt wird. Durch ein entsprechendes Steuersignal kann in der Vorladephase ein Ladestrom des Zwischenkreiskondensators 34 so eingestellt werden, dass seine mittlere Stromstärke unterhalb eines vorgegebenen Höchstwerts bleibt. Die Vorladung kann getaktet erfolgen. Alternativ dazu kann der Schalter S_{ZK} auch als steuerbarer Vorladewiderstand für den Zwischenkreiskondensators 34 angesteuert werden.

Bevorzugt ist der Schalter S_{ZK} ein selbstsperrender Halbleiterschalter, d.h. bei einer Steuerspannung in einem Bereich um 0V befindet er sich in einem sperrenden Zustand.

Mittels des Schalters S_{ZK} und der Steuereinrichtung ist sowohl eine gesteuerte Aufladung des Zwischenkreiskondensators 34 in der Vorladephase als auch eine schnelle Trennung des umrichterseitigen Teils des Zwischenkreises 30 vom Netz 12 möglich. Letzteres ist beispielsweise in einem Fehlerfall zum Abbrechen der Betriebsphase nötig. Beim Öffnen des Schalters S_{ZK} nehmen hierbei sowohl der Kommutierungskondensator 36 als auch der zuschaltbare Kondensator 38 elektrische Energie auf, die von den Kommutierungsdrosseln L_{1***,***} L₂***,*** L₃ über die Einspeiseeinheit 28 in den Zwischenkreis 30 eingespeist wird.

Durch den Varistor 40 wird ein Stromfluss in den Kondensator 38 nur in dem geschilderten Fall einer abrupten Unterbrechung des Stromes zugelassen. Der Varistor 40 wird in dem gezeigten Beispiel nämlich erst bei einem Spannungswert der Zwischenkreisspannung U_{ZK} leitend, die größer als ein Spitzenwert der Netzspannung ist. In der Vorladephase bleibt der Kondensator 38 deshalb durch den großen elektrischen Widerstand des Varistors 40 von dem Leitungszweig Z₁ hochohmig abgekoppelt.

Ein Spannungswert größer als die Netzspannung entsteht dagegen, wenn der Schalter S_{ZK} unter Last geöffnet wird, wenn im Moment des Öffnens also ein Strom (insbesondere ein Fehler- oder Kurzschlussstrom) durch den Schalter S_{ZK} fließt. In diesem Fall induzieren dann die Kommutierungsdrosseln L₁***,*** L₂***,*** L₃ eine besonders hohe Induktionsspannung, wodurch auch die Zwischenkreisspannung U_{ZK} ebenfalls steigt. Der Kommutierungskondensator 36 lädt sich hierdurch auf und seine Spannung steigt. Für den Fall, dass die Spannung größer als ein Schwellenwert des Varistors 40 wird, sinkt der Widerstandswert des Varistors 40, so dass ein Stromfluss in den Kondensator 38 möglich wird. Die Spannungsanstiegsrate dieses Stromes ist dabei niedrig. Indem sich daraufhin auch der Kondensator 38 auflädt, wird die von den Kommutierungsdrosseln L_{1***,***} L₂***,*** L₃ im Zwischenkreis 30 induzierte Spannung auf einen für die Funktionstüchtigkeit der Komponenten des Frequenzumrichters 26 unkritischen Spannungswert begrenzt.

Aufgrund der sich ergebenden geringen Spannungsanstiegsrate beim Zuschalten des Kondensators 38***,*** kann dieser ein einfaches und damit kostengünstiges Modell sein. Zudem ergeben sich durch die geringeren Spannungsanstiegsraten auch geringe Anforderungen an die Isolationsfestigkeit. Deshalb beträgt ein Bauvolumen des zuschaltbaren Kondensators 38 nur ungefähr 10 bis 20 Prozent des Bauvolumens des Kommutierungskondensators 36. Der Kondensator 38 kann beispielsweise ein MKP-DC-Link-Kondensator (Kunststofffolienkondensator) sein.

Zum Bereitstellen der Kommutierungskapazität für den Normalbetrieb der Einspeiseeinheit 28 ist als Kommutierungskondensator 36 ein hochpulsfester Kondensator (für große Spannungsanstiegsraten) in den Frequenzumrichter 26 eingebaut worden. Beispielsweise kann der Kommutierungskondensator 36 ein Keramik- oder Folienkondensator sein. Das verwendete Modell ist sehr viel kleiner und kostengünstiger als es nötig gewesen wäre, wenn die Reihenschaltung aus dem Kondensator 38 und dem Varistor 40 nicht in dem Zwischenkreis 30 vorhanden wäre.

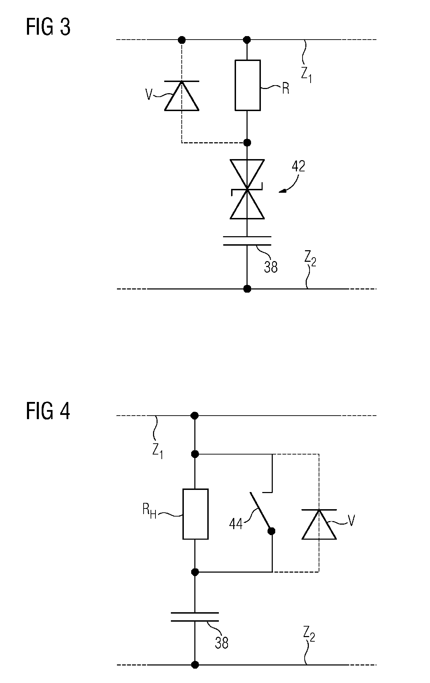

In FIG 3 und FIG 4 ist jeweils eine Reihenschaltung gezeigt, wie sie in anderen Frequenzumrichtern anstelle der in FIG 2 gezeigten Reihenschaltung aus dem Kondensator 38 und dem Varistor 40 eingebaut sind. In FIG 3 und FIG 4 sind Elemente, die Elementen in FIG 2 entsprechen, mit gleichen Bezugszeichen versehen.

In FIG 3 ist gezeigt, wie ein Kondensator 38 über eine Suppressordiode 42 mit einem Leitungszweig Z1 eines nicht weiter dargestellten Zwischenkreises gekoppelt ist. Eine Leitfähigkeit der Suppressordiode 42 nimmt ab einer bestimmten Spannung mit einem weiteren Spannungsanstieg sehr schnell zu. Im Vergleich zu einer Zenerdiode mit einer vergleichbaren Abmessung weist die Suppressordiode 42 ein höheres Ableitvermögen und eine kürzere Ansprechdauer auf.

Um eine Stromstärke eines Ladestromes des Kondensators 38 bei leitfähiger Suppressordiode 42 zu begrenzen, kann der Ladestrom zusätzlich, wie in FIG 3 gezeigt, über einen Widerstand R geführt sein. Zusätzlich zur oder anstelle von der Diode V kann auch ein (nicht dargestellter) hochohmiger Entladewiderstand eingebaut sein.

In FIG 4 ist ein Kondensator 38 über einen Schalter 44 zu einem Leitungszweig Z₁ eines Zwischenkreises zuschaltbar. Der Schalter 44 kann über eine (nicht gezeigte) Steuerleitung geschaltet werden. Der Schalter 44 kann ein elektrischer, mechanischer oder ein elektromechanischer Schalter sein. Die Ansteuerung über eine (nicht gezeigte) Steuerleitung erfolgt in Abhängigkeit von einem Betriebszustand eines (nicht weiter dargestellten) Frequenzumrichters, dessen Bestandteil der Zwischenkreis ist. Während einer Vorladung eines (nicht dargestellten) Zwischenkreiskondensators des Zwischenkreises ist der Schalter 44 geöffnet. In einer Betriebsphase kann er geöffnet oder geschlossen sein. Bei einem Abbruch der Betriebsphase in einem Fehlerfall wird der Schalter 44 geschlossen.

Dem Schalter 44 kann eine Diode V parallel geschaltet sein. Auch ein hochohmiger Entladungswiderstand R_{H} kann in die Reihenschaltung eingebaut sein.

Durch die Beispiele ist gezeigt, wie bei einem Frequenzumrichter in einer Vorladephase ein Zwischenkreiskondensator mittels eines Schalters gesteuert aufgeladen und gleichzeitig dauerhaft eine Kommutierungskapazität für eine Einspeiseeinheit bereitgestellt gestellt werden kann. Eine Entkopplung des Zwischenkreiskondensators durch Öffnen des Schalters unter Last führt durch zuschaltbare Kondensatoren nicht zu einer Beschädigung der Einspeiseeinheit aufgrund von induzierten Spannungen.

## Patentansprüche

1. Frequenzumrichter (26) zum Betreiben einer elektrischen Maschine (14) an einem elektrischen Netz (12), wobei der Frequenzumrichter (26) eine Einspeiseeinheit (28) und einen Umrichter (32) aufweist, die über einen Gleichspannungs-Zwischenkreis (30) miteinander verschaltet sind, in welchem durch zumindest einen Zwischenkreiskondensator (34) eine Zwischenkreiskapazität bereitgestellt ist, **dadurch gekennzeichnet , dass** der Zwischenkreis (30) zusätzlich einen zuschaltbaren Kondensator (38) aufweist.

2. Frequenzumrichter (26) nach Anspruch 1, bei dem der zuschaltbare Kondensator (38) über einen spannungsabhängigen Widerstand (40) mit einem Leitungszweig (Z₁) des Zwischenkreises (30) gekoppelt ist.

3. Frequenzumrichter (26) nach Anspruch 1 oder 2, bei dem der zuschaltbare Kondensator (38) über eine Zenerdiode und/oder eine Suppressordiode (42) mit einem Leitungszweig (Z₁) des Zwischenkreises (30) gekoppelt ist.

4. Frequenzumrichter (26) nach einem der vorhergehenden Ansprüche, bei dem der zuschaltbare Kondensator (38) über einen Schalter (44) mit einem Leitungszweig (Z₁) des Zwischenkreises (30) in Abhängigkeit von einem Steuersignal zuschaltbar ist.

5. Frequenzumrichter (26) nach einem der vorhergehenden Ansprüche, bei dem der zuschaltbare Kondensator (38) über eine Diode (V) und/oder einen Widerstand (R_{H}) mit einem Leitungszweig (Z₁) des Zwischenkreises (30) gekoppelt ist, wobei durch die Verschaltung der Diode (V) ermöglicht ist, dass sich der zuschaltbare Kondensator (38) in den Leitungszweig (Z₁) entlädt.

6. Frequenzumrichter (26) nach einem der vorhergehenden Ansprüche, bei dem der Zwischenkreiskondensator (34) von der Einspeiseeinheit (28) mittels eines Schalters (S_{ZK}) elektrisch trennbar ist.

7. Frequenzumrichter (26) nach Anspruch 6, bei dem der Zwischenkreis (30) zusätzlich einen dauerhaft mit der Einspeiseeinheit (28) elektrisch gekoppelten Kommutierungskondensator (36) aufweist, durch welchen eine Kommutierungskapazität für einen Normalbetrieb der Einspeiseeinheit (28) bereitgestellt ist.

8. Verfahren zum Betreiben eines Frequenzumrichters (26) gemäß einem der vorhergehenden Ansprüche, umfassend die Schritte:
- in einer Vorladephase, Blockieren eines Stromflusses in den zuschaltbaren Kondensator (38),
- bei einer Unterbrechung eines Stromflusses im Zwischenkreis (30), elektrisches Koppeln des zuschaltbaren Kondensators (38) mit einem Leitungszweig (Z₁) des Zwischenkreises (30) und hierdurch Ermöglichen eines Stromflusses in den zuschaltbaren Kondensator (38).

9. Verfahren nach Anspruch 8, bei dem auch in einer Betriebsphase des Frequenzumrichters (26) ein Stromfluss in den zuschaltbaren Kondensator (38) durch Bereitstellen einer elektrischen Kopplung ermöglicht wird.
